(19) Europäisches Patentamt
European Patent Office
Office européen des brevets

(11) EP 2 930 217 B1

# (12) EUROPÄISCHE PATENTSCHRIFT

(45) Veröffentlichungstag und Bekanntmachung des Hinweises auf die Patenterteilung:
**22.04.2020 Patentblatt 2020/17**

(51) Int Cl.:
***C09D 183/14*** (2006.01) ***C08G 77/50*** (2006.01)
***C09J 183/14*** (2006.01)

(21) Anmeldenummer: **15160742.1**

(22) Anmeldetag: **25.03.2015**

(54) **ALKOXYALKYLSILAN-MODIFIZIERTE POLYSILOXANE SOWIE VERFAHREN ZU DEREN HERSTELLUNG**

ALKOXYALKYLSILANE-MODIFIED POLYSILOXANES AND METHOD FOR THE PRODUCTION THEREOF

ALCOXYALKYLSILANE - POLYSILOXANES MODIFIÉS ET LEUR PROCÉDÉ DE FABRICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.04.2014 DE 102014206991**

(43) Veröffentlichungstag der Anmeldung:
**14.10.2015 Patentblatt 2015/42**

(73) Patentinhaber: **CHT Germany GmbH**
**72072 Tübingen (DE)**

(72) Erfinder:
- **Schurek, Petr**
**72393 Burladingen/Killer (DE)**
- **Nickel, Friedhelm**
**72072 Tübingen (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**US-A- 4 772 675**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Alkoxysilan-modifizierten Polysiloxane und die durch dieses Verfahren hergestellten Polysiloxane sowie deren Verwendung. Polysiloxane oder chemisch genauer Polyorganosiloxane werden umgangssprachlich oft als Silikone bezeichnet. Hierbei handelt es sich um eine Gruppe synthetischer Polymere, bei denen Siliziumatome über Sauerstoffatome verknüpft sind. Aufgrund ihres typisch anorganischen Gerüsts einerseits und der organischen Reste andererseits nehmen Polysiloxane eine Zwischenstellung zwischen anorganischen und organischen Verbindungen ein. Sie sind in gewisser Weise Hybride und weisen daher ein einzigartiges Eigenschaftsspektrum auf, das unter anderem auf der Wärmebeständigkeit beziehungsweise der Kältebeständigkeit aber auch der elektrischen Eigenschaften der Polysiloxane beruht.

Im Stand der Technik hinlänglich beschrieben sind Verfahren zur Herstellung von Alkoxy-modifizierten Siloxanen mit geringen Viskositäten. Hierbei werden Triethoxy-modifizierte Siloxane durch direkte Hydrosilylierung von Siloxanen, welche eine reaktive Si-H-Gruppe aufweisen, mit Alkoxyvinylsilanen zu Reaktion gebracht. Dieses Verfahren ist insbesondere zur Herstellung von Polysiloxanen mit geringen Molmassen von bis zu 15.000 g/mol geeignet. Mit steigender Molmasse wird es jedoch schwieriger mittels der direkten Hydrosilylierung einen vollständigen Umsatz der Edukte zu erreichen. Polysiloxane mit einem Molmasse von 50.000 g/mol oder mehr können auf diese Art nur sehr schwer hergestellt werden.

Polysiloxane mit einer mittleren Molmasse bis zu 20.000 g/mol und einer Viskosität bei 20 °C von etwa 1.500 mPas können mit im Stand der Technik bekannten Äquilibrierungsverfahren hergestellt werden. Die erhaltenen Reaktionsprodukte weisen jedoch häufig einen hohen Anteil an flüchtigen Bestandteilen auf, die in vielen Anwendungen, zum Beispiel in der Elektroindustrie, unerwünscht sind, da sie Kontaktflächen belegen und dadurch Störungen verursachen können. Um diesem entgegenzuwirken, werden die flüchtigen Bestandteile üblicherweise durch eine Destillation weitgehend entfernt. Es ist nun die Aufgabe der vorliegenden Erfindung, ein Alkoxysilan-modifiziertes Polysiloxan bereitzustellen, welches ohne einen Destillationsschritt zur Aufreinigung erhalten wird. Eine weitere Aufgabe ist die Bereitstellung eines Verfahrens zur Herstellung von Alkoxyalkylsilan-modifizierten Polysiloxanen, welches die Nachteile aus dem Stand der Technik vermeidet.

Das Dokument US 4 772 675 offenbart ein Verfahren, das dem vorliegenden Verfahren ähnlich ist, wobei jedoch ein "Endcapper" zuerst durch Reaktion von (b) und (c) hergestellt wird.

In einer ersten Ausführungsform wird die der vorliegenden Erfindung zugrundeliegende Aufgabe durch ein Verfahren, wobei ein Alkoxyalkylsilan-modifiziertes Polysiloxan der folgenden allgemeinen Formel P hergestellt wird,

Formel P:

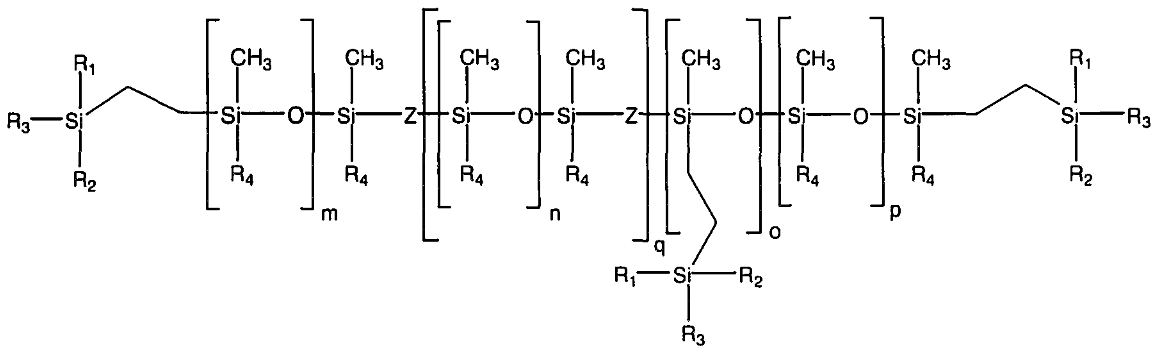

gelöst,
in welcher jeweils unabhängig voneinander

- $R_1$ $R_2$ oder $OR_5$ bedeutet, wobei $R_5$ ein Wasserstoffatom (H-Atom) oder ein linearer oder verzweigter, gesättigter oder ungesättigter, gegebenenfalls substituierter Kohlenwasserstoffrest mit 1 bis 8 Kohlenstoffatomen ist, insbesondere $R_5$ für einen einwertigen Kohlenwasserstoffrest mit 1 oder 2 Kohlenstoffatomen steht,
- $R_2$ $R_1$ oder ein Oximrest der Formel $-O-N=C=R_7$ bedeutet, wobei $R_7$ ein linearer Kohlenwasserstoffrest mit 4 Kohlenstoffatomen oder ein cyclischer Kohlenwasserstoffrest mit 6 Kohlenstoffatomen ist,
- $R_3$ $R_1$ oder $R_2$ oder ein einwertiger, SiC-gebundener gesättigter Kohlenwasserstoffrest mit 1 bis 8 Kohlenstoffatomen oder ein Kohlenwasserstoffrest mit terminaler Kohlenstoff-Kohlenstoff-Doppelbindung mit 2 Kohlenstoffatomen ist,
- $R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist, in welcher w, x, y unabhängig voneinander gleich oder verschieden sein können und jeweils eine Zahl von 0 bis 50 bedeuten und Q ein Wasserstoffatom

oder ein aliphatischer Kohlenwasserstoffrest mit 1 bis 4 C-Atomen bedeutet,

Z ein einwertiger, SiC-gebundener gesättigter Kohlenwasserstoffrest mit 2 Kohlenstoffatomen ist,

m eine ganze Zahl von 1 bis 200, insbesondere von 1 bis 100, besonders von 1 bis 50 ist,

n eine ganze Zahl von 1 bis 1.000, insbesondere von 1 bis 500, besonders von 1 bis 200 ist,

o eine ganze Zahl von 0 bis 50, insbesondere von 0 bis 20, besonders von 0 bis 10 ist,

p eine ganze Zahl von 1 bis 50, insbesondere von 1 bis 20, besonders von 1 bis 10 ist und

q eine ganze Zahl von 1 bis 50, insbesondere von 1 bis 20, besonders von 1 bis 10 ist.

Überraschenderweise hat sich gezeigt, dass entsprechende Polysiloxane insbesondere mit einer Viskosität von 200 mPas bis 1.000.000 mPas bei 20 °C mit einer hohen optischen Klarheit erhalten werden können. Bei den Alkoxyalkylsilan-modifizierten Polysiloxanen im Sinne der vorliegenden Erfindung kann es sich um ein Öl oder Fett oder auch um eine kautschukartige Verbindung handeln.

Im erfindungsgemäßen Polysiloxan kann der Rest $R_1$ die Bedeutung von $R_2$ haben. Weiterhin kann $R_1$ die Bedeutung $OR_5$ haben, wobei $R_5$ ein Wasserstoffatom oder ein linearer oder verzweigter, gesättigter, ungesättigter, gegebenenfalls substituierter Kohlenwasserstoffrest mit 1 bis 8 Kohlenstoffatomen ist. Dabei können die in der Formel P angegebenen Reste $R_1$ soweit sie sich an unterschiedlichen Positionen im Molekül befinden voneinander unabhängig die jeweilige Definition annehmen. Bevorzugt ist der Rest $R_1$ innerhalb des Polysiloxans der allgemeinen Formel P gleich.

Handelt es sich bei $R_1$ um einen Kohlenwasserstoffrest mit 1 bis 8 Kohlenstoffatomen, so kann dieser erfindungsgemäß linear oder verzweigt sein. Ebenfalls ist es möglich einen gesättigten oder ungesättigten Kohlenwasserstoffrest einzusetzen. Der Kohlenwasserstoffrest kann substituiert sein. Beispiele für substituierte Reste $R_5$ sind Halogenalkylreste, wie zum Beispiel ein 3-Chlorpropylrest. Anstelle von Chlor können auch Fluor, Brom oder Jod als Halogenatom eingesetzt werden. Bevorzugt handelt es sich bei $R_5$ und einen einwertigen Kohlenwasserstoffrest mit 1 oder 2 Kohlenstoffatomen.

Unabhängig von $R_1$ kann der Rest $R_2$ in der allgemeinen Formel P dieselbe Bedeutung wie $R_1$ haben. $R_2$ kann auch ein Oximrest der Formel $-O-N=C=R_7$ bedeuten. Der Rest $R_3$ kann die gleiche Bedeutung haben, wie $R_1$ beziehungsweise $R_2$. $R_3$ kann darüber hinaus auch einen einwertigen, SiC-gebundenen gesättigten Kohlenwasserstoffrest mit 1 bis 8 Kohlenstoffatomen oder einen Kohlenwasserstoffrest mit terminaler Kohlenstoff-Kohlenstoff-Doppelbindung mit 2 Kohlenstoffatomen darstellen. Beispiele entsprechender ungesättigter Reste sind insbesondere Alkenylreste, wie ein Vinylrest. Erfindungsgemäß ist es möglich, dass, ebenso wie hinsichtlich $R_1$ ausgeführt, $R_2$ und $R_3$ jeweils unabhängig voneinander unterschiedliche Bedeutungen annehmen können, soweit die Reste an unterschiedlichen Stellen innerhalb des Moleküls der allgemeinen Formel P vorkommen. Vorzugsweise ist der Rest $R_2$ innerhalb des Polysiloxans gemäß der allgemeinen Formel P gleich. Ebenso hat der Rest $R_3$ innerhalb der Formel P vorzugsweise dieselbe Bedeutung.

Auch $R_4$, bei welchem es sich um einen aliphatischen Kohlenwasserstoffrest mit 1 bis 30 Kohlenstoffatomen, einen Phenylrest und/oder einen Polyetherrest der allgemeinen Formel $(CH_2)_3O(C_2H_4O)_w(C_3H_6O)_x(C_4H_8O)_yQ$ handelt, kann innerhalb des Moleküls der allgemeinen Formel P dieselbe oder unterschiedliche Bedeutung annehmen. Bevorzugt handelt es sich bei dem Rest $R_4$ im Gesamtmolekül um jeweils den gleichen Rest.

In dem vorliegenden Verfahren wird ein erstes Organosiloxan (a) mit zwei oder mehr endständigen aliphatischen ungesättigten reaktiven Gruppen und ein zweites Organosiloxan (b) mit wenigstens einer reaktiven SiH-Gruppe in Anwesenheit eines Alkoxyvinylsilans (c) mit einer endständigen aliphatischen ungesättigten reaktiven Gruppe miteinander in Kontakt gebracht werden.

Das erfindungsgemäße Verfahren ermöglicht die Herstellung von Alkoxyalkylsilan-modifizierten Polysiloxanölen oder kautschukähnlichen Verbindungen mit einer Viskosität von 200 mPas bis 1.000.000 mPas bei 20 °C. In dem Verfahren werden drei voneinander verschiedene Organosiloxane miteinander in Kontakt gebracht. Dabei weisen sowohl das erste Organosiloxan (a) als auch das Alkoxyvinylsilan (c) eine aliphatische ungesättigte reaktive Gruppe auf. Das erste Organosiloxan (a) unterscheidet sich vom Alkoxyvinylsilan (c) dadurch, dass das erste Organosiloxan (a) zwei endständige aliphatische ungesättigte reaktive Gruppen aufweist. Das erste Organosiloxan (a) dient damit als Kettenverlängerer bei der Herstellung des erfindungsgemäßen Polysiloxans. Das Alkoxyvinylsilan (c) weist hingegen lediglich eine endständige aliphatische ungesättigte reaktive Gruppe auf. Durch Kontrolle des Anteils des Alkoxyvinylsilans (c) in der Reaktionsmischung zur Herstellung des erfindungsgemäßen Polysiloxans kann die Kettenlänge des erhaltenen Endprodukts kontrolliert werden.

Überraschenderweise hat sich gezeigt, dass insbesondere ein Verhältnis aus aliphatischen ungesättigten reaktiven Gruppen zu der Anzahl an SiH-Bindungen im Bereich von 1,5 : 1 bis 0,5 : 1, insbesondere von 1,2 : 1 und besonders von 1 : 1 zu einem gewünschten Produkt führt. Die Menge an aliphatisch ungesättigten reaktiven Gruppen entspricht dabei den Gruppen, die sowohl im ersten Organosiloxan (a) als auch im Alkoxyvinylsilan (c) enthalten sind. Das erfindungsgemäße Verhältnis ermöglicht dabei, dass die reaktiven SiH-Bindungen des zweiten Organosiloxans (b) vollständig abreagieren. Es findet so eine vollständige oder wenigstens nahezu vollständige Umsetzung der Edukte miteinander statt. Das erhaltene Produkt weist vorzugsweise keine flüssigen Bestandteile in Form von Edukten auf.

Eine weitere Aufreinigung des durch das erfindungsgemäße Verfahren erhaltenen Produkts in Form von Destillation ist nicht notwendig, insbesondere wenn das Verhältnis aus aliphatisch ungesättigten reaktiven Gruppen zu SiH-Bindungen in dem erfindungsgemäßen Bereich liegt. Bei diesem Verhältnis findet eine vollständige Reaktion der Edukte statt, wodurch ein hochviskoses Polysiloxan erhalten wird, welches ein optisch klares Produkt mit einem hohen Feststoffanteil darstellt. Der Feststoffanteil des erhaltenen Polysiloxans liegt insbesondere bei wenigstens 99,5 Gew.-% und vorzugsweise bei 100 Gew.-%. Der Feststoffanteil kann durch gravimetrische Infrarottrocknung bestimmt werden. Die Infrarottrockung kann in einem Moisture Analyser erfolgen. Dazu wird zum Beispiel in den Probenschalenhalter eines Mettler Toledo Halogen Moisture Analyzer HG 53 ein leeres Aluminiumwägeschälchen gegeben, mit Seesand bestreut und tariert. 1,0 g Produkt (Alkoxysilan modifiziertes Polysiloxan) wird auf das Schälchen gleichmäßig auftragen. Nach dem Programmstart wird die Probe auf 140°C erwärmt. Nach Massenkonstanz über 30 Sekunden ist der Messvorgang beendet, der Probeneinschub wird automatisch ausgefahren und der Feststoffanteil als Ergebnis wird angezeigt und kann ausgedruckt werden.

Das erste Organosiloxan (a) ist vorzugsweise ein alkensubstituiertes Polydiorganosiloxan, insbesondere handelt es sich um ein Dimethylsiloxan mit an Silizium gebundenen endständigen Vinyl- und/oder Allyl- und/oder Hexenyl-Gruppen. Besonders bevorzugt ist es ein Molekül der folgenden allgemeinen Formel A:

Formel A

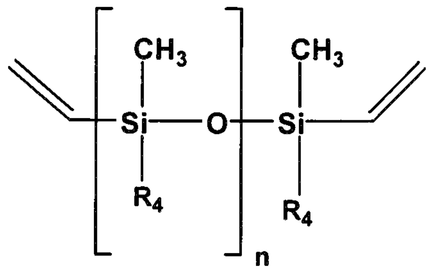

in welcher

$R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist, in welcher w, x, y unabhängig voneinander gleich oder verschieden sein können und eine Zahl von 0 bis 50 bedeuten und Q ein Wasserstoffatom oder ein aliphatischer Kohlenwasserstoffrest mit 1 bis 4 C-Atomen bedeutet, und

n eine ganze natürliche Zahl von 1 bis 1.000, insbesondere von 1 bis 500, besonders von 1 bis 200 ist.

Die Molmasse des ersten Organosiloxans (a) ist nicht eingeschränkt und kann frei gewählt werden. Vorzugsweise handelt es sich um ein flüssiges Organosiloxan mit einer Viskosität bei 20 °C im Bereich von 200 mPas bis 1.000.000 mPas. Es kann sich jedoch ebenso um eine kautschukartige Verbindung mit einer hohen Viskosität bei 20 °C im Bereich von 200.000 mPas bis 1.000.000 mPas handeln. Eine solche kautschukartige Verbindung weist üblicherweise einen Polymerisationsgrad von 3.000 bis 10.000 auf. Als Polymerisationsgrad wird dabei die Anzahl der Monomereinheiten in einem Polymermolekül bezeichnet. Besonders bevorzugt handelt es sich bei dem ersten Organosiloxan (a) um ein Dimethylsiloxan mit endständigen Dimethylvinyl-Gruppen mit einer Viskosität im Bereich von 200 mPas bis 50.000 mPas bei 20 °C.

Das Alkoxyvinylsilan (c) entspricht bevorzugt der allgemeinen Formel C.

Formel C:

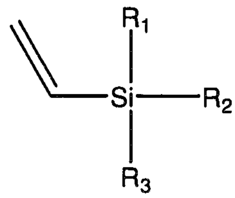

in welcher $R_1$ und $R_2$ dieselbe Bedeutung wie zu Formel P ausgeführt haben und $R_3$ eine aliphatische ungesättigte Gruppe ist.

Das zweite Organosiloxan (b) weist insbesondere eine oder mehrere end- und/oder seitenständige reaktive SiH-Gruppen auf. Bevorzugt weist es zwei oder mehr reaktive SiH-Gruppen auf. Insbesondere ist es ein Molekül gemäß der folgenden allgemeinen Formel B:

Formel B

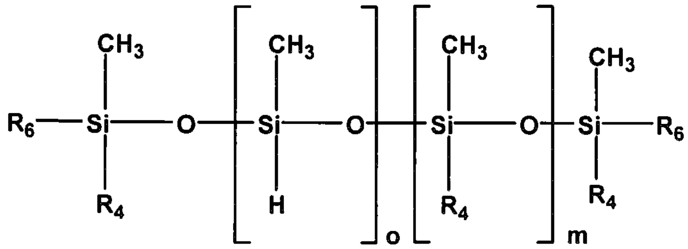

in welcher jeweils unabhängig voneinander

- $R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist, in welcher w, x, y unabhängig voneinander gleich oder verschieden sein können und eine Zahl von 0 bis 50 bedeuten und Q ein Wasserstoffatom oder ein Alkylrest mit 1 bis 4 C-Atomen bedeutet,
- $R_6$ ein Wasserstoffatom oder ein Methylrest ist,
- m eine ganze Zahl von 1 bis 200, insbesondere von 1 bis 100, besonders von 1 bis 50 ist und
- o eine ganze Zahl von 0 bis 50, insbesondere von 0 bis 20, besonders von 0 bis 10 ist.

Das zweite Organosiloxan (b) kann erfindungsgemäß eine oder mehrere seitenständige SiH-Gruppen aufweisen. Ebenso ist es möglich, dass es eine oder mehrere endständige SiH-Gruppen aufweist. Auch das Vorhandensein sowohl von einer oder mehreren Seiten, seitenständigen als auch von einer oder mehreren endständigen SiH-Gruppen ist erfindungsgemäß möglich. Die Wahl der Position der SiH-Gruppen bestimmt dann, ob das erhaltene Produkt linear oder verzweigt ist.

Das erfindungsgemäße Verfahren wird vorzugsweise in Anwesenheit eines Katalysators (d) durchgeführt. Bei dem Katalysator (d) handelt es sich insbesondere um einen Hydrosylilierungskatalysator, der Platin umfasst. Geeignete Katalysatoren sind beispielsweise Fluoroplatinsäure, Platinacetylacetonat, Komplexe von Platinhaliden mit ungesättigten Verbindungen wie beispielsweise Ethylen, Propylen, Organovinylsiloxanen oder Styrol, Hexamethyldiplatin, $PtCl_2$ x $PtCl_3$ oder $Pt(CN)_3$. Besonders bevorzugt handelt es sich bei dem Katalysator (d) um Komplexverbindungen aus Platinverbindungen mit Vinylsiloxan.

Bevorzugt setzt man den Katalysator (d) in einer solchen Menge ein, dass der Anteil an Platin 1 bis 100 ppm, insbesondere 1 bis 10 ppm beträgt. Diese Menge ist ausreichend, um die zuvor beschriebene Reaktion insbesondere bei Raumtemperatur zu katalysieren. Größere Mengen an Katalysator (d) würden lediglich die Kosten für das Verfahren in die Höhe treiben. Bei dem Anteil in ppm handelt es sich um Gew.-ppm. Hierbei bedeutet ein ppm Platin, dass ein Gramm Platin bezogen auf tausend Kilogramm Reaktionsmischung, bestehend aus erstem Organosiloxan (a), zweitem Organosiloxan (b) und Alkoxyvinylsilan (c) eingesetzt wird.

Das erfindungsgemäße Verfahren wird insbesondere bei einer Temperatur im Bereich von -20 °C bis 200 °C, insbesondere von 10 °C bis 120 °C und besonders bevorzugt von 40 °C bis 100 °C durchgeführt. Bei diesen Temperaturen ist der erfindungsgemäße Katalysator (d), bei welchem es sich insbesondere um einen Karstedt-Katalysator handelt, besonders aktiv. Die erfindungsgemäße Reaktion wird daher schnell katalysiert und man erhält innerhalb kurzer Zeit das gewünschte Produkt, bei welchem es sich um ein farbloses, optisch klares Polymer in Form eines Polysiloxans handelt.

In erfindungsgemäß hergestellten Polysiloxanen finden sich bevorzugt keine aktiven Wasserstoffsiliziumbindungen mehr. Insbesondere ist der Anteil an aktiven Wasserstoffsiliziumbindungen 0. Zur Bestimmung des Wasserstoffgehalts von H-Si-Bindungen in den erfindungsgemäßen Polysiloxanen wird eine bestimmte Menge des Polysiloxans in einem Rundkolben eingewogen. Nach dem Anbringen unter einem Tropftrichter mit Gasleitung wird der erzeugte Überdruck über einen zweiten Hals durch Öffnen eines Verschlusses abgebaut.

Danach wird dieser wieder verschlossen. Durch einen Tropftrichter wird eine 10%ige Lösung von KOH in Butanol im Überschuss zugegeben. Es kommt zu folgender Reaktion:

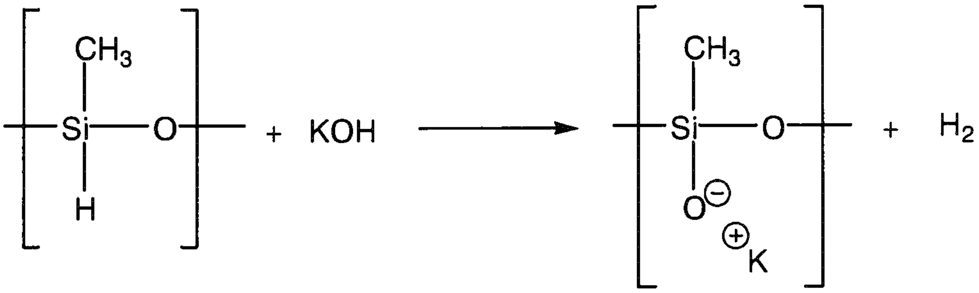

Der entstandene Wasserstoff wird über eine Gasleitung um den Verschluss des Tropftrichters herum geleitet und erzeugt dort einen Überdruck. Durch diesen Überdruck wird in einer angeschlossenen Volumenmesssäule konzentrierte KCl-Lösung verdrängt und somit das entstandene Volumen an $H_2$ gemessen. Es ist darauf zu achten, dass der Stand an der Messsäule zu Beginn exakt auf 0 ist und dass beim Ablesen immer ein Höhenausgleich zwischen dem Meniskus in der Messsäule und dem Meniskus im Trichter am Ende des Schlauches zum Befüllen der Säule vorgenommen wird, um keine Druckunterschiede aufgrund der Höhe der Wassersäulen zu erzeugen.

Der Wasserstoffgehalt berechnet sich danach wie folgt:
Es gilt die ideale Gasgleichung: $p * V = n * R * T$
mit

| | |
|---|---|
| p = | Druck (aktueller Messwert) [Pa] |
| V = | Volumen (Messwert) [ml] |
| n = | Stoffmenge = m/M = Masse [g]/Molmasse [g/mol] |
| R = | Gaskonstante 8,3144621 J/(mol*K) |
| T = | Temperatur in K |

Daraus folgt:

$$p * V(H_2) = \frac{m(H_2)}{M(H_2)} * R * T \longrightarrow m(H_2) = \frac{p * V(H_2) * M(H_2)}{R * T}$$

$$H\% = \frac{m(H_2)}{2 * m_{Einwaage}} * 100\%$$

In Fig. 1 ist schematisch eine entsprechende Apparatur zur Bestimmung des Wasserstoffgehaltes gezeigt. Dabei wird der Magnetrührer mit 1 bezeichnet. Im Wasserbad zur Kühlung 2 befindet sich der Rundkolben 3, welcher das Polysiloxan sowie einen Rührfisch enthält. Über die Gasleitung 4, welche sich am Tropftrichter 5 befindet, kann ein Druckausgleich erfolgen. Im Tropftrichter 5 befindet sich eine 10 %ige KOH-Lösung in Butanol. Das entstehende Wasserstoffgas wird über einen mit konzentrierter KCl-Lösung gefüllten Schlauch 6 geführt. An der Volumenmesssäule 7 kann das entstandene Volumen an $H_2$ gemessen werden. Zum Höhenausgleich befindet sich am Ende des Schlauches 6 ein Ausgleichsgefäß 8.

Die Viskosität des Polysiloxane und Organosiloxane kann mit einem Viskosimeter Brookfield RVTDV II bestimmt werden. Die Messung erfolgt bei 20 °C. Angaben zur Viskosität in der vorliegenden Beschreibung beziehen sich jeweils auf eine Temperatur von 20 °C, soweit nicht anders angegeben.

Die Bestimmung der mittleren Molmasse der Polysiloxane beziehungsweise Organosiloxane erfolgte mittels GPC (Gel-Permeations-Chromatographie). Als mobile Phase wurde Toluol verwendet. Die Flussrate betrug 1,0 ml pro Minute bei einem Druck von 100 bar und einer Temperatur von 30 °C. Zur Bestimmung wurden 3 g des Polymers oder Oligomers in einem Liter Toluol gelöst. Zur Kalibrierung wurde ein Polydimethylsiloxan (PDMS)-Standard der Firma PSS in Molmassenbereich von 311 bis 381.000 g/mol eingesetzt.

Das erfindungsgemäße Polysiloxan kann insbesondere in bei Raumtemperatur vernetzenden Silikonklebstoffen, Silikondichtmassen und Silikonbeschichtungsmitteln eingesetzt werden.

Ausführungsbeispiele:

Beispiel 1:

In einem Rundkolben mit einem Magnetrührstäbchen, einem Thermometer und einem Rückflusskühler wurden 915,66 g eines Vinylsiloxanpolymers mit endständiger Vinylgruppe und einem mittleren Molmasse von 31.000 g/mol, einer Viskosität von 1.000 mPas und einem Feststoffgehalt von 99,5 % bei 140 °C eingefüllt. Hierbei entsprechen 915,66 g 2 Molen. Zu dem Vinylsiloxanpolymer wurden 79,37 g eines Organosiloxans (3 Mol) mit endständigen H-Si-Bindungen mit einem mittleren Molmasse von 816 g/mol, einer Viskosität von 15 mPas und einem Wasserstoffgehalt von 1.400 ppm und 4,87 g Vinyltrimethoxysilan (2 Mol) mit einem Molmasse von 148 g/mol zugegeben. Die erhaltene Mischung wurde auf 50 °C erwärmt. Anschließend wurden 3 ppm an Platin in Form eines Karstedt-Katalysators hinzugegeben. Die Temperatur wurde auf 90 °C erhöht. Bei dieser Temperatur wurde die Mischung für 1 h gerührt. Anschließend wurde das Reaktionsgemisch auf Raumtemperatur abgekühlt. Von dem erhaltenen Produkt wurde der Wasserstoffgehalt im Hinblick auf H-Si-Bindungen bestimmt. Der Wasserstoffgehalt war 0. Die Hydrosilylierung war somit vollständig.

Das erhaltene Polymer hatte ein Molmasse von 65.000 g/mol (bestimmt mittels GPC), einen Feststoffgehalt von 99,8 Gew.-% und eine Viskosität von 12.500 mPas bei 20 °C. Das erhaltene Produkt war zudem klar. Das Polymer lag in Form eines Gels vor und entsprach der folgenden allgemeinen Formel 1:

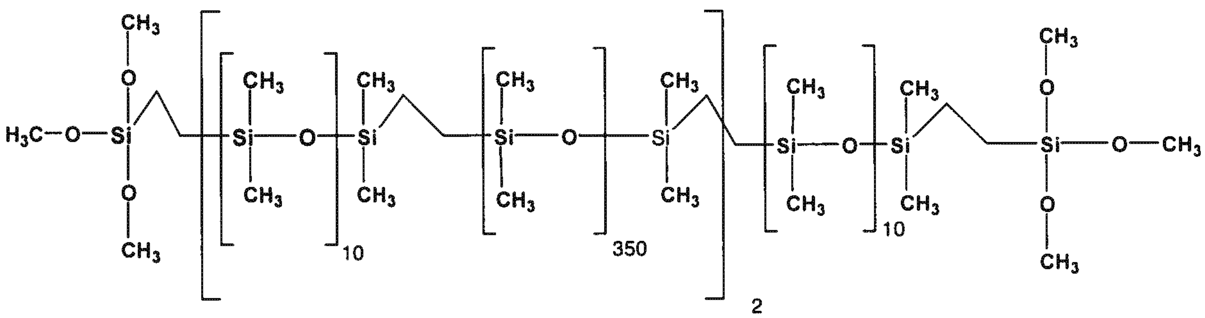

Beispiel 2:

In einem gleichen Reaktionsaufbau wie zu Beispiel 1 beschrieben wurden 916,7 g eines endständigen Vinylsiloxanpolymers mit einem durchschnittlichen Molmasse von 31.000 g/mol, einer Viskosität von 1.000 mPas bei 20 °C und einem Feststoffgehalt (bestimmt mittels GPC bei 140 °C) von 99,5 Gew.-% zusammen mit 73,9 g eines dritten Organosiloxans mit endständigen H-Si-Bindungen mit einem Molmasse von 816 g/mol, einer Viskosität von 15 mPas und einem Wasserstoffgehalt von 1.400 ppm, 1,802 g eines Siloxans, welches endständige und seitenständige H-Si-Bindungen aufweist, mit einem Molmasse von 2.110 g/mol mit einer Viskosität von 500 mPas bei 20 °C und einem Wasserstoffgehalt von 1.715 ppm und 7,5 g Vinyltrimethoxysilan mit einem Molmasse von 148 g/mol miteinander gemischt.

Das Gemisch wurde auf 50 °C erwärmt. Bei dieser Temperatur wurden 5 ppm Platin in Form eines Karstedt-Katalysators zugegeben. Anschließend wurde die Temperatur auf 100 °C erhöht und für 2 h gehalten. Nach Abkühlen des Reaktionsgemisches auf Raumtemperatur wurde der Wasserstoffgehalt in Form von H-Si-Bindungen im erhaltenen Produkt bestimmt. Der Wasserstoffgehalt war 0, wodurch nachgewiesen werden konnte, dass die Hydrosilylierungsreaktion vollständig abgelaufen ist. Das erhaltene Polymer hatte ein Molmasse von 49.800 g/mol (bestimmt mittels GPC), einen Feststoffgehalt von 99,85 Gew.-% und eine Viskosität von 5.100 mPas. Diese Werte entsprechen den aufgrund der gewählten Ausgangsprodukte berechneten Werten. Das Produkt entspricht einem Produkt der folgenden Formel 2:

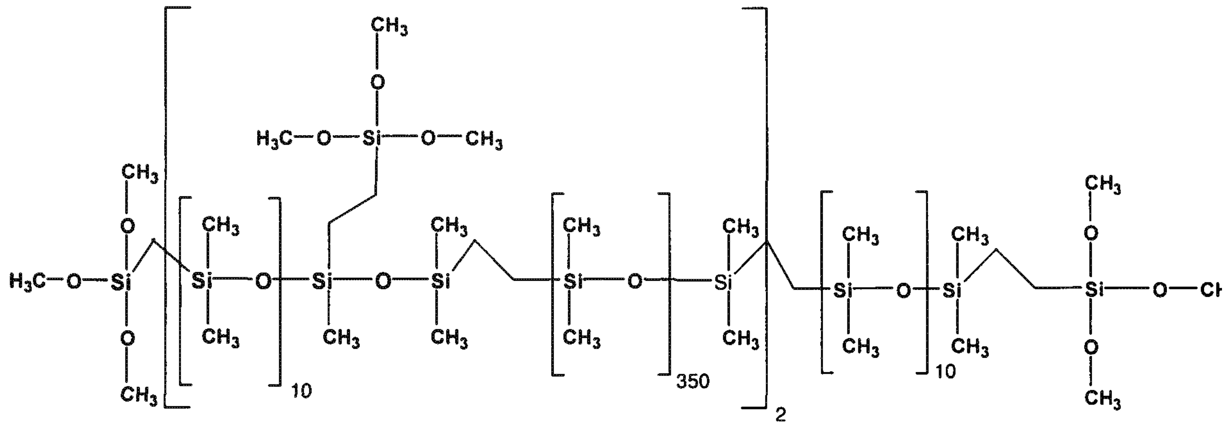

Das erhaltene Produkt konnte in einer weiteren Vernetzungsreaktion zu einem Gel vernetzt werden. Das hergestellte Siloxan war optisch transparent.

Beispiel 3:

Analog zu Beispiel 1 wurden 916,9 g eines Siloxanpolymers mit endständigen Vinylgruppen (Molmasse 31.000 g/mol, Viskosität 1.000 mPas bei 20 °C, Feststoffgehalt 99,5 Gew.-% bei 140 °C), 78,5 g Organosiloxan mit endständigen Wasserstoffatomen (mittleres Molmasse 816 g/mol, Viskosität 15 mPas, Wasserstoffanteil 1.400 ppm) und 3,7 g Vinyltrimethoxysilan (Molmasse 148 g/mol) miteinander gemischt.

Die Mischung wurde auf 50 °C erhitzt. Bei dieser Temperatur wurden 5 ppm Platin in Form eines Karstedt-Katalysators zugefügt. Nach dem die Temperatur auf 100 °C erhöht wurde und bei dieser Temperatur 2 h gerührt wurde, wurde die Mischung auf Raumtemperatur abgekühlt. In dem erhaltenen Produkt wurde der Wasserstoffgehalt bestimmt. Dieser war 0, so dass davon ausgegangen werden kann, dass die Hydrosilylierung vollständig abgelaufen war.

Das erhaltene Polysiloxan hatte ein Molmasse von 112.000 g/mol (bestimmt mittels GPC), ein Feststoffgehalt von 99,85 Gew.-% und eine Viskosität von 51.000 mPas. Die Werte stimmen mit denen zuvor kalkulierten Werten überein. Das Produkt entspricht einem Produkt der folgenden Formel 3:

Formel 3:

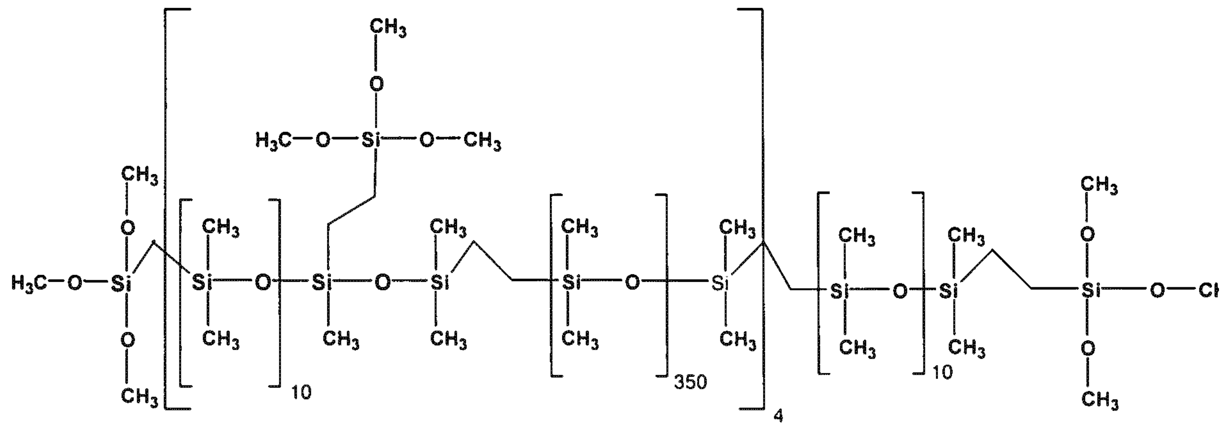

Das erhaltene Produkt zeigte keine Trübungen, sondern war optisch klar. Es konnte in weiteren Vernetzungreaktionen zu einem Gel weiterverarbeitet werden.

**Patentansprüche**

1. Verfahren zur Herstellung eines alkoxyalkylsilan-modifizierten Polysiloxans der folgenden allgemeinen Formel P:

Formel P:

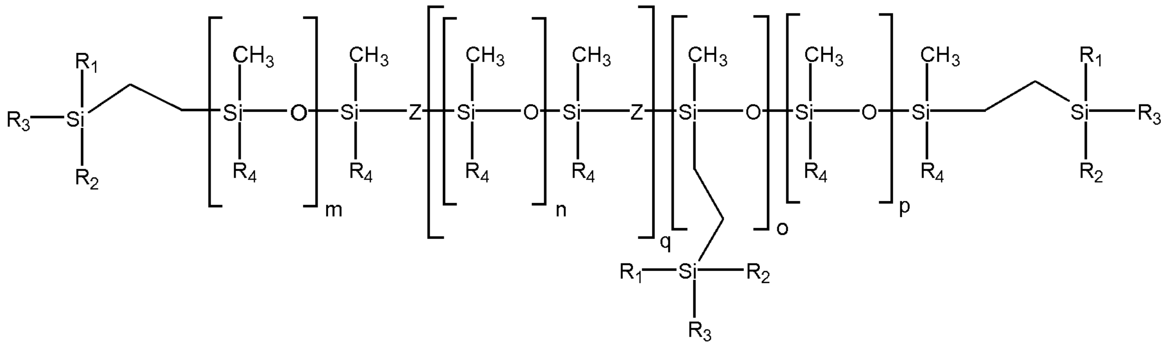

in welcher jeweils unabhängig voneinander

$R_1$ ein Oximrest der Formel -O-N=C=$R_7$ bedeutet, wobei $R_7$ ein linearer Kohlenwasserstoffrest mit 4 Kohlenstoffatomen oder ein cyclischer Kohlenwasserstoffrest mit 6 Kohlenstoffatomen ist oder $OR_5$ bedeutet, wobei $R_5$ ein Wasserstoffatom (H-Atom) oder ein linearer oder verzweigter, gesättigter oder ungesättigter, gegebenenfalls substituierter Kohlenwasserstoffrest mit 1 bis 8 Kohlenstoffatomen ist, insbesondere $R_5$ für einen einwertigen Kohlenwasserstoffrest mit 1 oder 2 Kohlenstoffatomen steht,
$R_2$ $R_1$ ist,
$R_3$ $R_1$ oder ein einwertiger, SiC-gebundener gesättigter Kohlenwasserstoffrest mit 1 bis 8 Kohlenstoffatomen oder ein Kohlenwasserstoffrest mit terminaler Kohlenstoff-Kohlenstoff-Doppelbindung mit 2 Kohlenstoffatomen ist,
$R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist,
in welcher w, x, y unabhängig voneinander gleich oder verschieden sein können und jeweils eine Zahl von 0 bis 50 bedeuten und
Q ein Wasserstoffatom oder ein aliphatischer Kohlenwasserstoffrest mit 1 bis 4 C-Atomen bedeutet,
Z ein einwertiger, SiC-gebundener gesättigter Kohlenwasserstoffrest mit 2 Kohlenstoffatomen ist,
m eine ganze Zahl von 1 bis 200, insbesondere von 1 bis 100, besonders von 1 bis 50 ist,
n eine ganze Zahl von 1 bis 1.000, insbesondere von 1 bis 500, besonders von 1 bis 200 ist,
o eine ganze Zahl von 0 bis 50, insbesondere von 0 bis 20, besonders von 0 bis 10 ist,
p eine ganze Zahl von 1 bis 50, insbesondere von 1 bis 20, besonders von 1 bis 10 ist und
q eine ganze Zahl von 1 bis 50, insbesondere von 1 bis 20, besonders von 1 bis 10 ist,

wobei in dem Verfahren ein erstes Organosiloxan (a) mit zwei oder mehr endständigen aliphatischen ungesättigten reaktiven Gruppe und ein zweites Organosiloxan (b) mit wenigstens einer reaktiven Si-H-Gruppe in Anwesenheit eines Alkoxyvinylsilans (c) mit einer endständigen aliphatischen ungesättigten reaktiven Gruppe miteinander in Kontakt gebracht werden.

2. Verfahren nach Anspruch 1, **dadurch gekennzeichnet, dass** das Verhältnis aus aliphatischen ungesättigten reaktiven Gruppen, welche im ersten Organosiloxan (a) und im Alkoxyvinylsilan (c) enthalten sind, zu der Anzahl an Si-H-Bindungen im zweiten Organosiloxan (b) im Bereich von 1,5 : 1 bis 0,5 :1 liegt, insbesondere 1,2 : 1 und besonders 1 : 1 beträgt.

3. Verfahren nach Anspruch 1 oder 2, **dadurch gekennzeichnet, dass** das erste Organosiloxan (a) ein Alken-substituiertes Polydiorganosiloxan, insbesondere ein Dimethylsiloxan mit am Silizium gebundenen endständigen Vinylgruppen, und besonders ein Molekül der folgenden allgemeinen Formel A ist:

Formel A

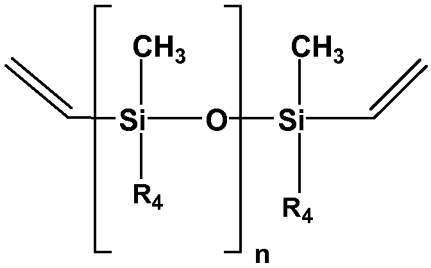

in welcher

$R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist,
in welcher w, x, y unabhängig voneinander gleich oder verschieden sein können und eine Zahl von 0 bis 50 bedeuten und
Q ein Wasserstoffatom oder ein aliphatischer Kohlenwasserstoffrest mit 1 bis 4 C-Atomen bedeutet, und
n eine ganze natürliche Zahl von 1 bis 1.000, insbesondere von 1 bis 500, besonders von 1 bis 200 ist.

4. Verfahren nach einem der Ansprüche 1 bis 3, **dadurch gekennzeichnet, dass** das zweite Organosiloxan (b) eine oder mehrere end- und/oder seitenständige Si-H-Gruppen aufweist und insbesondere ein Molekül gemäß der folgenden allgemeinen Formel B ist:

Formel B

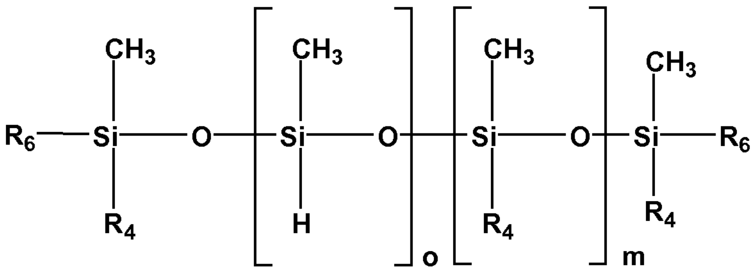

in welcher jeweils unabhängig voneinander

$R_4$ ein aliphatischer Kohlenwasserstoffrest mit 1 bis 30 Kohlenstoffatomen, ein Phenylrest und/oder ein Polyetherrest der allgemeinen Formel $(CH_2)_3O(C_2H_4O)_w(C_3H_6O)_x(C_4H_8O)_yQ$ ist,
in welcher w, x, y unabhängig voneinander gleich oder verschieden sein können und eine Zahl von 0 bis 50 bedeuten und
Q ein Wasserstoffatom oder ein Alkylrest mit 1 bis 4 C-Atomen bedeutet,
$R_6$ ein Wasserstoffatom oder ein Methylrest ist,
m eine ganze Zahl von 1 bis 200, insbesondere von 1 bis 100, besonders von 1 bis 50 ist und
o eine ganze Zahl von 0 bis 50, insbesondere von 0 bis 20, besonders von 0 bis 10 ist.

5. Verfahren nach einem der Ansprüche 1 bis 4, **dadurch gekennzeichnet, dass** es in Anwesenheit eines Katalysators (d), der insbesondere ein Hydrosilylierungskatalysator ist, der Platin umfasst, durchgeführt wird.

6. Verfahren nach Anspruch 5, **dadurch gekennzeichnet, dass** man den Katalysator (d) in einer solchen Menge einsetzt, dass der Gehalt an Platin 1 bis 100 ppm, insbesondere 1 bis 10 ppm beträgt.

7. Verfahren nach einem der Ansprüche 1 bis 6, **dadurch gekennzeichnet, dass** die Reaktion bei einer Temperatur im Bereich von -20 °C bis 200 °C, insbesondere von 10 °C bis 120 °C, besonders von 40 °C bis 100 °C durchgeführt wird.

**8.** Alkoxyalkylsilan-modifiziertes Polysiloxan der allgemeinen Formel P, erhältlich mit einem Verfahren gemäß einem der Ansprüche 1 bis 7.

**9.** Polysiloxan nach Anspruch 8, **dadurch gekennzeichnet, dass** es eine Viskosität von 200 mPas bis 1.000.000 mPas bei 20 °C aufweist, gemessen mit einem Viskosimeter Brookfield RVTDV II bei 20 °C.

**10.** Verwendung des Polysiloxans nach Anspruch 8 oder 9 in bei Raumtemperatur vernetzenden Silikonklebstoffen, Silikondichtmassen und Silikonbeschichtungsmitteln.

## Claims

**1.** A process for producing an alkoxyalkylsilane-modified polysiloxane of the following general formula P:

Formula P:

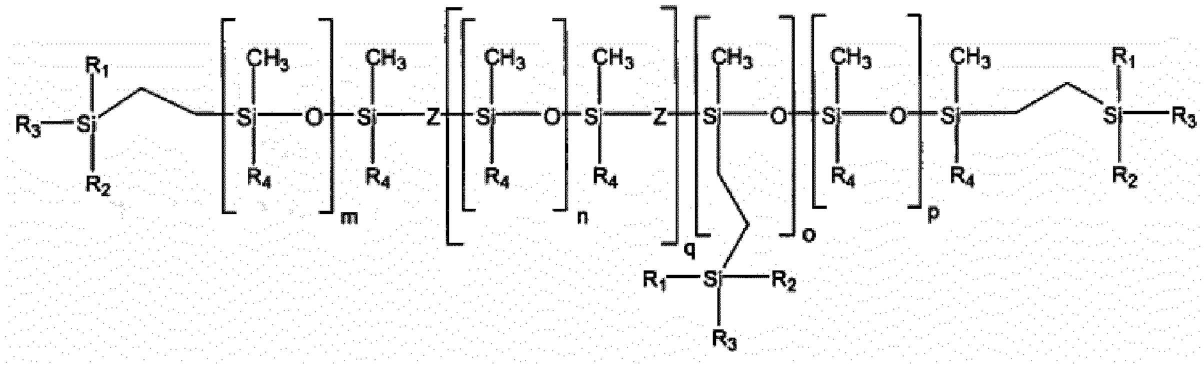

in which, independently of one another:

$R_1$ represents an oxime radical of formula $-O-N=C=R_7$, wherein $R_7$ is a linear hydrocarbon radical with 4 carbon atoms, or a cyclic hydrocarbon radical with 6 carbon atoms, or represents $OR_5$, wherein $R_5$ is a hydrogen (H) atom or a linear or branched, saturated or unsaturated, optionally substituted hydrocarbon radical with 1 to 8 carbon atoms, in particular, $R_5$ represents a monovalent hydrocarbon radical with 1 or 2 carbon atoms;
$R_2$ is $R_1$;
$R_3$ is $R_1$ or a monovalent SiC-bonded saturated hydrocarbon radical with 1 to 8 carbon atoms, or a hydrocarbon radical with a terminal carbon-carbon double bond with 2 carbon atoms;
$R_4$ is an aliphatic hydrocarbon radical with 1 to 30 carbon atoms, a phenyl radical, and/or a polyether radical of general formula $(CH_2)_3O(C_2H_4O)_w(C_3H_6O)_x(C_4H_8O)_yQ$, in which w, x, y are independently the same or different and respectively represent a number from 0 to 50; and
Q represents a hydrogen atom or an aliphatic hydrocarbon radical with 1 to 4 carbon atoms;
Z is a monovalent SiC-bonded saturated hydrocarbon radical with 2 carbon atoms;
m is an integer of from 1 to 200, especially from 1 to 100, especially from 1 to 50;
n is an integer of from 1 to 1000, especially from 1 to 500, especially from 1 to 200;
o is an integer of from 0 to 50, especially from 0 to 20, especially from 0 to 10;
p is an integer of from 1 to 50, especially from 1 to 20, especially from 1 to 10; and
q is an integer of from 1 to 50, especially from 1 to 20, especially from 1 to 10;

wherein in said process a first organosiloxane (a) with two or more terminal aliphatic unsaturated reactive groups and a second organosiloxane (b) with at least one reactive Si-H group are contacted with one another in the presence of an alkoxyvinylsilane (c) having a terminal aliphatic unsaturated reactive group.

**2.** The process according to claim 1, **characterized in that** the ratio of aliphatic unsaturated reactive groups contained in the first organosiloxane (a) and in the alkoxyvinylsilane (c) to the number of Si-H bonds in the second organosiloxane (b) is within a range of from 1.5 : 1 to 0.5 : 1, especially 1.2 : 1, and especially 1 : 1.

3. The process according to claim 1 or 2, **characterized in that** the first organosiloxane (a) is an alkene-substituted polydiorganosiloxane, especially a dimethylsiloxane with terminal vinyl groups bonded to silicon, especially a molecule of the following general formula A:

Formula A

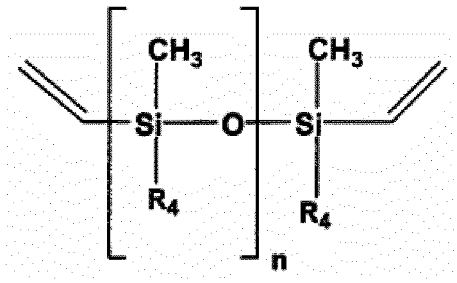

in which

$R_4$ is an aliphatic hydrocarbon radical with 1 to 30 carbon atoms, a phenyl radical, and/or a polyether radical of general formula $(CH_2)_3O(C_2H_4O)_w(C_3H_6O)_x(C_4H_8O)_yQ$, in which w, x, y may independently be the same or different and represent a number from 0 to 50; and
Q represents a hydrogen atom or an aliphatic hydrocarbon radical with 1 to 4 carbon atoms; and
n is a whole natural number of from 1 to 1000, especially from 1 to 500, especially from 1 to 200.

4. The process according to any of claims 1 to 3, **characterized in that** the second organosiloxane (b) has one or more terminal and/or pendant Si-H groups, and in particular, that it is a molecule according to the following general formula B:

Formula B:

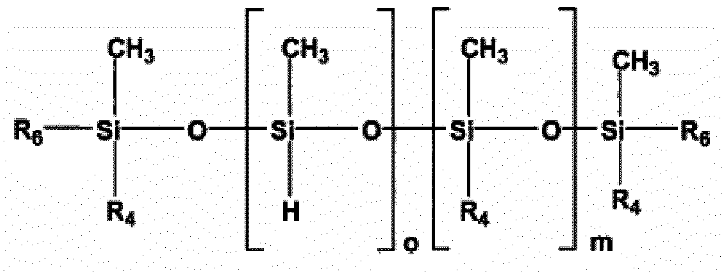

in which, independently of one another:

$R_4$ is an aliphatic hydrocarbon radical with 1 to 30 carbon atoms, a phenyl radical, and/or a polyether radical of general formula $(CH_2)_3O(C_2H_4O)_w(C_3H_6O)_x(C_4H_8O)_yQ$, in which w, x, y may independently be the same or different and represent a number from 0 to 50; and
Q represents a hydrogen atom or an alkyl radical with 1 to 4 carbon atoms;
$R_6$ is a hydrogen atom or a methyl radical;
m is an integer of from 1 to 200, especially from 1 to 100, especially from 1 to 50; and
o is an integer of from 0 to 50, especially from 0 to 20, especially from 0 to 10.

5. The process according to any of claims 1 to 4, **characterized by** being performed in the presence of a catalyst (d), in particular one being a hydrosilylation catalyst comprising platinum.

6. The process according to claim 5, **characterized in that** the catalyst (d) is employed in such an amount that the

content of platinum is from 1 to 100 ppm, especially from 1 to 10 ppm.

**7.** The process according to any of claims 1 to 6, **characterized in that** the reaction is performed at a temperature within a range of from -20 °C to 200 °C, especially from 10 °C to 120 °C, especially from 40 °C to 100 °C.

**8.** An alkoxyalkylsilane-modified polysiloxane of general formula P, obtainable by a process according to any of claims 1 to 7.

**9.** The polysiloxane according to claim 8, **characterized by** having a viscosity of from 200 mPa·s to 1,000,000 mPa·s at 20 °C, as measured with a Brookfield RVTDV II viscometer at 20 °C.

**10.** Use of the polysiloxane according to claim 8 or 9 in room temperature curing silicone adhesives, silicone sealants and silicone coating agents.

## Revendications

**1.** Procédé pour préparer un polysiloxane à modification alkoxyalkylsilane, répondant à la formule générale P suivante :

formule P :

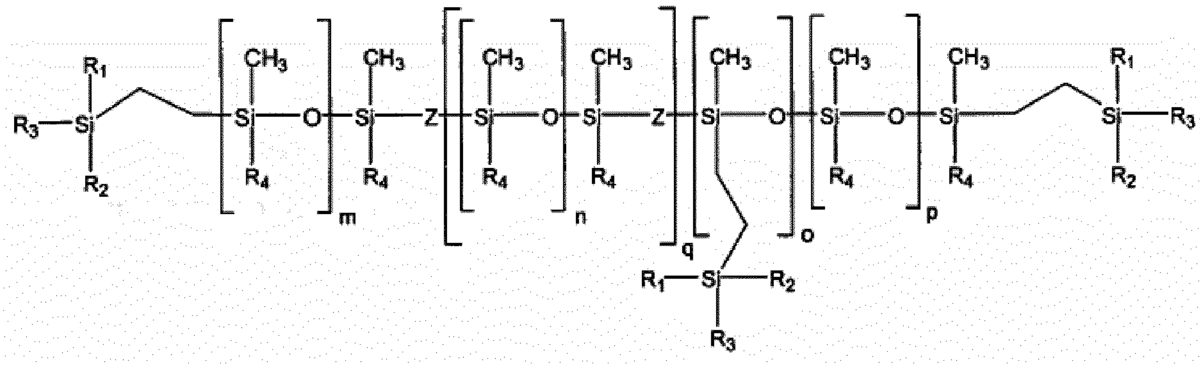

où indépendamment l'un de l'autre

$R_1$ représente un radical oxime répondant à la formule -O-N=C=$R_7$, où $R_7$ représente un radical hydrocarboné linéaire avec 4 atomes de carbone, ou un radical hydrocarboné cyclique avec 6 atomes de carbone, ou représente $OR_5$, dans lequel $R_5$ est un atome d'hydrogène (H) ou un radical hydrocarboné linéaire ou ramifié, saturé ou non, avec 1 à 8 atomes de carbone, éventuellement substitué, notamment $R_5$ représente un radical hydrocarboné monovalent avec 1 ou 2 atomes de carbone,
$R_2$ est $R_1$,
$R_3$ est $R_1$ ou un radical hydrocarboné saturé monovalent lié par SiC avec 1 à 8 atomes de carbone, ou un radical hydrocarboné ayant une double liaison carbone-carbone terminale, avec 2 atomes de carbone,
$R_4$ est un radical hydrocarboné aliphatique avec 1 à 30 atomes de carbone, un radical phényle et/ou un radical polyéther répondant à la formule générale $(CH_2)_3O(C_2H_4O)_w(C_3H_6O)_x(C_4H_8O)_yQ$, où w, x, y sont indépendamment identiques ou différents et respectivement représentent un nombre de 0 à 50, et Q est un atome d'hydrogène ou un radical hydrocarboné aliphatique avec 1 à 4 atomes de carbone,
Z est un radical hydrocarboné saturé monovalent lié par SiC avec 2 atomes de carbone,
m est un nombre entier de 1 to 200, notamment de 1 à 100, notamment de 1 à 50,
n est un nombre entier de 1 à 1000, notamment de 1 à 500, notamment de 1 à 200,
o est un nombre entier de 0 à 50, notamment de 0 à 20, notamment de 0 à 10,
p est un nombre entier de 1 à 50, notamment de 1 à 20, notamment de 1 à 10, et
q est un nombre entier de 1 à 50, notamment de 1 à 20, notamment de 1 à 10,

dans lequel, dans le procédé, un premier organosiloxane (a) avec deux ou plusieurs groupes réactifs aliphatiques

insaturés terminaux et un deuxième organosiloxane (b) avec au moins un groupe réactif Si-H sont mis en contact l'un avec l'autre en présence d'un alcoxyvinylsilane (c) avec un groupe réactif aliphatique insaturé terminal.

2. Procédé selon la revendication 1, **caractérisé en ce que** le rapport de groupes réactifs aliphatiques insaturés contenus dans le premier organosiloxane (a) et dans l'alcoxyvinylsilane (c) au nombre de liaisons Si-H dans le deuxième organosiloxane (b) est compris entre 1,5 : 1 à 0,5 : 1, notamment 1,2 : 1, et notamment 1 : 1.

3. Procédé selon la revendication 1 ou 2, **caractérisé en ce que** le premier organosiloxane (a) est un polydiorganosiloxane substitué par un alcène, notamment un diméthylsiloxane avec des groupes vinyles terminaux liés au silicium, et notamment une molécule répondant à la formule générale A suivante :

formule A :

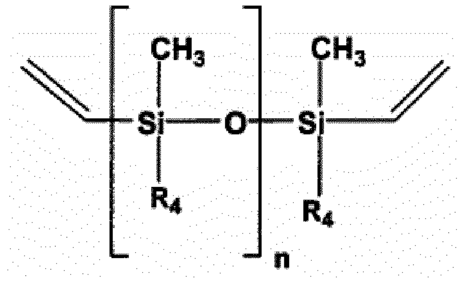

où

$R_4$ est un radical hydrocarboné aliphatique avec 1 à 30 atomes de carbone, un radical phényle et/ou un radical polyéther répondant à la formule générale $(CH_2)_3O(C_2H_4O)_w(C_3H_6O)_x(C_4H_8O)_yQ$, où w, x, y sont indépendamment identiques ou différents et respectivement représentent un nombre de 0 à 50, et Q est un atome d'hydrogène ou un radical hydrocarboné aliphatique avec 1 à 4 atomes de carbone, et
n est un nombre entier de 1 à 1000, notamment de 1 à 500, notamment de 1 à 200.

4. Procédé selon l'une quelconque des revendications 1 à 3, **caractérisé en ce que** le deuxième organosiloxane (b) présente un ou plusieurs groupes Si-H terminaux et/ou pendants, notamment étant une molécule répondant à la formule générale B suivante :

formule B

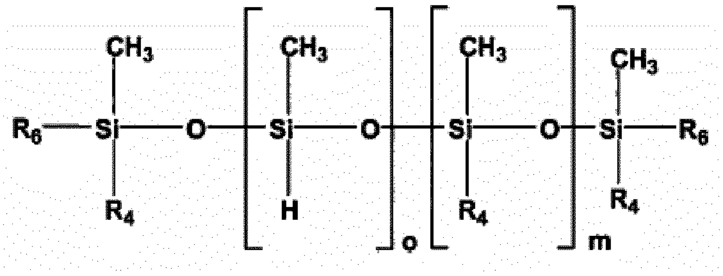

où indépendamment l'un de l'autre

$R_4$ est un radical hydrocarboné aliphatique avec 1 à 30 atomes de carbone, un radical phényle et/ou un radical polyéther répondant à la formule générale $(CH_2)_3O(C_2H_4O)_w(C_3H_6O)_x(C_4H_8O)_yQ$, où w, x, y sont indépendamment identiques ou différents et respectivement représentent un nombre de 0 à 50, et Q est un atome d'hydrogène ou un radical hydrocarboné aliphatique avec 1 à 4 atomes de carbone,
$R_6$ est un atome d'hydrogène ou un radical méthyle,
m est un nombre entier de 1 to 200, notamment de 1 à 100, notamment de 1 à 50, et

o est un nombre entier de 0 à 50, notamment de 0 à 20, notamment de 0 à 10.

5. Procédé selon l'une quelconque des revendications 1 à 4, **caractérisé en ce qu'**il est effectué dans la présence d'un catalyseur (d), qui est notamment un catalyseur d'hydrosilylation comprenant du platine.

6. Procédé selon la revendication 5, **caractérisé en ce que** le catalyseur (d) est utilisé en une telle quantité que la teneur en platine est de 1 à 100 ppm, notamment de 1 à 10 ppm.

7. Procédé selon l'une quelconque des revendications 1 à 6, **caractérisé en ce que** la réaction est effectuée à une température comprise entre -20 °C et 200 °C, notamment de 10 °C à 120 °C, notamment de 40 °C à 100 °C.

8. Polysiloxane à modification alkoxyalkylsilane répondant à la formule générale P, pouvant être obtenu par un procédé selon l'une quelconque des revendications 1 à 7.

9. Polysiloxane selon la revendication 8, **caractérisé en ce qu'**il présente une viscosité de 200 mPa·s à 1.000.000 mPa·s à 20 °C, mesurée au moyen d'un viscosimètre de type Brookfield RVTDV II à 20 °C.

10. Utilisation du polysiloxane selon la revendication 8 ou 9 dans des colles silicones, des masses d'étanchéité en silicone et des agents de revêtement pouvant être réticulés à température ambiante.

FIG. 1

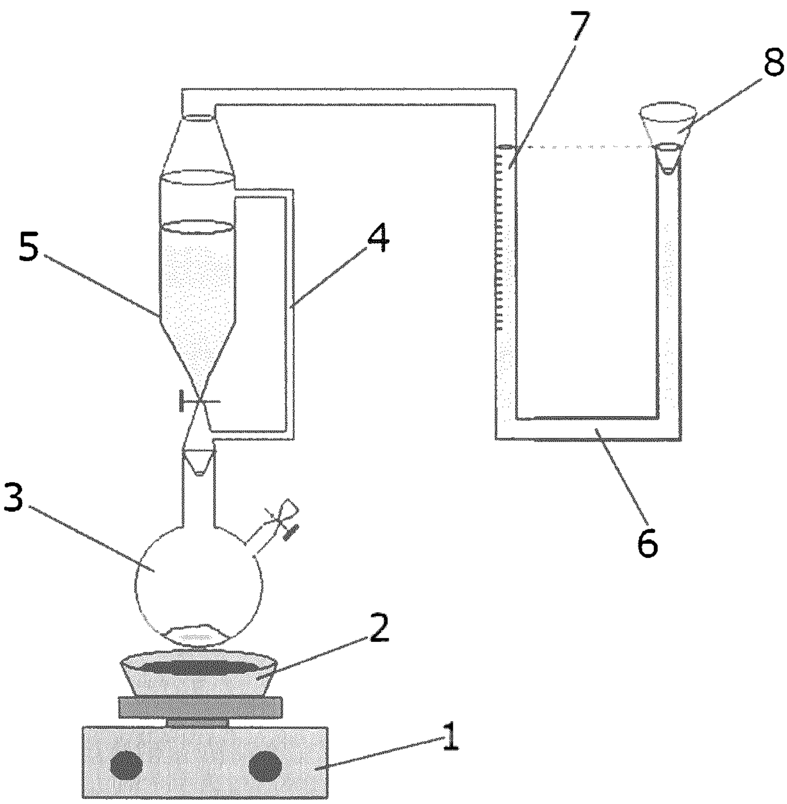

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 4772675 A